# EUROPÄISCHE PATENTSCHRIFT

(11) **EP 2 105 270 B1**
(45) Veröffentlichungstag und Bekanntmachung des Hinweises auf die Patenterteilung: **05.10.2011**
(21) Anmeldenummer: 08006046.0
(22) Anmeldetag: 28.03.2008
(51) Int. Cl.: B27M 3/18, B23Q 7/04

(54) **Zuführeinrichtung für eine Bearbeitungsmaschine**
Supply device for a processing machine
Dispositif d'alimentation pour une machine d'usinage

(43) Veröffentlichungstag der Anmeldung: 30.09.2009
(73) Patentinhaber: Weeke Bohrsysteme GmbH, 33442 Herzebrock-Clarholz (DE)
(72) Erfinder: Heimann, Reinhard, 33332 Gütersloh (DE); Brinkhaus, Werner, 33378 Rheda-Wiedenbrück (DE)
(74) Vertreter: Siegert, Georg

(56) Entgegenhaltungen:
- EP-A- 1 726 404
- DE-A1- 2 608 340
- DE-A1- 10 026 069

## Beschreibung

### Technisches Gebiet

Die vorliegende Erfindung betrifft eine Zuführeinrichtung für eine Bearbeitungsmaschine zur Bearbeitung von bevorzugt plattenförmigen Werkstücken, welche Werkstücke bevorzugt zumindest teilweise aus Holz, Holzwerkstoffen, Kunststoff oder dergleichen bestehen, nach dem Oberbegriff von Anspruch 1. Weiter betrifft die Erfindung ein Verfahren unter Einsatz der erfindungsgemäßen Zuführeinrichtung, sowie eine Bearbeitungsmaschine, welche die erfindungsgemäße Zuführeinrichtung verwendet.

### Stand der Technik

Im Bereich der Möbelindustrie sind unterschiedliche Zuführeinrichtungen für plattenförmige Werkstücke zu einer Bearbeitungsmaschine bekannt. Beispielsweise werden die später zu bearbeitenden Werkstücke auf einen Zuführtisch aufgelegt und zu diesen aufnehmenden Greifelementen geschoben. Diese Greifelemente, die beispielsweise als Zangen ausgeführt sein können, erfassen die Werkstücke an einer Seite des Werkstücks und fördern es über den Zuführtisch in Richtung der Bearbeitungsmaschine. Allerdings ist eine solche Zuführeinrichtung hinsichtlich unterschiedlicher Dimensionen der plattenförmigen Werkstücke nicht variierbar. Weiter kommt es aus Sicherheitsgründen zur Unterbrechung des Zuführbetriebs, während eine Bedienperson ein neues Werkstück beschickt. Dies führt zu unerwünschten Nebenzeiten.

Als weiterer Stand der Technik ist das Dokument DE 26 08 340 A1 bekannt, das ein Verfahren zur Plattenaufteilung und eine zugehörige Plattenaufteilsäge mit automatisierter Beschickung und selbsttätiger Abräumung des Schnittgutes betrifft. Die Vorrichtung weist einen Paketschieber 27 und am Ende des Auflagentisches einen absenkbaren Anschlag auf.

Weiter ist das Dokument EP 1 726 404 A1 bekannt, das einen Auflagentisch mit verstellbaren Saugvorrichtungen betrifft. Die Bearbeitungseinrichtung weist zwischen Auflagentisch und Zuführeinrichtung zumindest zwei Anschlagelemente auf.

### Darstellung der Erfindung

Der vorliegenden Erfindung liegt die Aufgabe zugrunde, bei einer Zuführeinrichtung für eine Bearbeitungsmaschine die Flexibilität dieser Zuführeinrichtung hinsichtlich der Dimensionen der bevorzugt plattenförmigen Werkstücke zu verbessern, ohne die Komplexität der Zuführeinrichtung wesentlich zu erhöhen oder deren grundsätzliche Ausgestaltung zu ändern. Weiter sollen unerwünschte Nebenzeiten reduziert werden.

Die Aufgabe wird durch eine Zuführeinrichtung gelöst, die die Merkmale nach Anspruch 1 aufweist, sowie ein Verfahren nach Anspruch 14.

Der vorliegenden Erfindung liegt die Erkenntnis zugrunde, dass bei bekannten Zuführeinrichtungen keine hohe Flexibilität hinsichtlich unterschiedlicher Werkstückdimensionen gegeben ist. Vor diesem Hintergrund ist es vorgesehen, eine bekannte Zuführeinrichtung in zumindest zwei Auflagebereiche aufzuteilen, die wiederum mittels eines ersten Anschlags getrennt sind. Demnach ist eine Zuführeinrichtung nach dem Oberbegriff von Anspruch 1 weiter dadurch gekennzeichnet, dass die Auflagefläche des Zuführtisches einen ersten und einen zweiten Auflagebereich aufweist, wobei die beiden Auflagebereiche durch einen absenkbaren ersten Anschlag voneinander getrennt sind. Auf diese Weise wird eine Zuführeinrichtung bereitgestellt, welche je nach Größe der zu beschickenden plattenförmigen Werkstücke an deren Dimension angepasst werden kann, indem bei kleinen Werkstücken der erste Anschlag trennend zwischen den beiden Auflagenbereichen des Zuführtisches vorgesehen ist, bei großen Werkstücken dieser Anschlag abgesenkt werden kann.

Dies hat den Vorteil, dass kleine Werkstücke am ersten Anschlag ausgerichtet und/oder vorpositioniert werden können, große Werkstücke jedoch, welche sowohl den ersten als auch den zweiten Auflagebereich benötigen, um auf den Zuführtisch aufliegen zu können, mittels derselben Zuführeinrichtung beschickt werden können, nachdem der erste Anschlag abgesenkt wurde und somit die gesamte Auflagefläche mit dem ersten und zweiten Auflagebereich zur Verfügung steht.

Bevorzugt ist der erste Anschlag im Wesentlichen in einer hinsichtlich einer Längserstreckung des Zuführtisches mittigen Position vorgesehen und sich in einer zur Längserstreckung des Zuführtisches senkrechten Richtung erstreckt. Dabei ist die Längserstreckung des Tisches auch die Förderrichtung des Werkstückes, wobei das Werkstück selbst nicht notwendigerweise in Förderrichtung in die Zuführeinrichtung beschickt werden muss.

Es ist bevorzugt vorgesehen, dass an der erfindungsgemäßen Zuführeinrichtung zumindest zwei Greifelemente vorgesehen sind. So ist es bei kurzen Werkstücken vorteilhaft, zwei Greifelemente zu verwenden, um die bevorzugt plattenförmigen Werkstücke aufzunehmen. Bei längeren Werkstücken kann es gemäß einer eigenen Zielrichtung der Erfindung bevorzugt sein, drei Greifelemente einzusetzen, um die langen Werkstücke gegen Durchbiegen zu sichern. Außerdem wird hierdurch ermöglicht, eines oder mehr der Greifelemente bereits wieder zurückbewegt wird/ werden, um ein neues Werkstück aufzunehmen, während das übrige/ die übrigen Greifelement/e das "alte" Werkstück noch halten oder ausfördern. Das Merkmal, wenigstens drei Greifelemente einzusetzen, kann auch eigenständig, d.h. ohne den ersten absenkbaren Anschlag verwirklicht werden, um die erwähnten Vorteile zu erzielen.

Eine derartige Zuführeinrichtung zur Bearbeitung von bevorzugt plattenförmigen Werkstücken, welche Werkstücke bevorzugt zumindest teilweise aus Holz, Holzwerkstoffen, Kunststoff oder dergleichen bestehen, umfasst: ein Führungselement, zumindest ein am Führungselement geführtes und verfahrbares Greifelement, das eingerichtet ist, die bevorzugt plattenförmigen Werkstücke aufzunehmen, sowie einen Zuführtisch in der Nähe zum Führungselement zur Übergabe von Werkstücken an die Greifelemente, der in Erstreckungsrichtung des Führungselement ausgerichtet ist und eine Auflagefläche aufweist, die eingerichtet ist, die bevorzugt plattenförmigen Werkstücke aufzunehmen. Weiter umfasst die Zuführeinrichtung zumindest drei Greifelemente.

Das "Auflegen" oder "Beschicken" von bevorzugt plattenförmigen Werkstücken kann sowohl manuell als auch durch eine weitere Fördereinrichtung durchgeführt werden. Weiter ist ein "Auflegen" oder "Beschicken" von jeder Richtung aus in Richtung des Zuführtisches möglich, wobei die weitere Förderung vom Zuführtisch aus nicht beeinträchtigt werden soll. Zwar ist eine Förderung in einer Richtung längs oder quer zum Tisch bevorzugt, es ist aber auch eine kombinierte längs-quer-Förderung denkbar.

In einer Ausführungsform der vorliegenden Erfindung ist es vorgesehen, dass der erste Auflagenbereich in zumindest einer Richtung zu dem zumindest einen Greifelement hin relativ zum Zuführtisch beweglich ist. Somit kann ein auf dem ersten Auflagenbereich aufgebrachtes Werkstück durch eine Bewegung des ersten Auflagenbereiches in den Spannbereich des zumindest einen Greifelements eingeführt werden, so dass dieses Greifelement das Werkstück erfassen kann.

Um das Werkstück im Greifelement oder in den Greifelementen auszurichten, können in dem Greifelement oder in den Greifelementen eine oder mehrere Ausrichtvorrichtungen vorgesehen sein. Bevorzugt ist es vorgesehen, dass sich diese Ausrichtvorrichtung in einer zu den Spannflächen der Greifelemente senkrechten Richtung zwischen den Greifelementspannflächen erstrecken. So ist es besonders bevorzugt, diese Ausrichtvorrichtung aus einer Vielzahl von Bolzen bereitzustellen, die zwischen den Spannzangen der Greifelemente verlaufen, wobei die Spannbewegung eines Greifelements nicht durch die Ausrichtvorrichtung behindert wird. Auf diese Weise ist es möglich, ein Werkstück, das durch das zumindest eine Greifelement aufgenommen werden soll, durch einen horizontalen Hub z.B. des ersten Auflagenbereichs zwischen die Spannflächen des zumindest einen Greifelements und gegen die Ausrichtvorrichtung(-en) des Greifelements zu bringen.

Weiter ist es bevorzugt vorgesehen, dass auf mindestens einer Seite des Auflagebereichs des Zuführtisches ein erster Sicherheitsbereich, und auf zumindest einer Seite des zweiten Auflagebereichs des Zuführtisches ein zweiter Sicherheitsbereich vorgesehen ist. Denn bei der manuellen Beschickung von kleinen Werkstücken wird die Person, welche die plattenförmigen Werkstücke zur Zuführeinrichtung beschickt, den ersten Sicherheitsbereich betreten. Folglich muss bei Beschickung mit kleinen Werkstücken der erste Sicherheitsbereich gegenüber dem zweiten Sicherheitsbereich weniger kritisch erachtet werden. So bedingt beispielsweise ein Betreten des ersten Sicherheitsbereiches nicht ein Anhalten der erfindungsgemäßen Zuführeinrichtung, und ein Ausrichten und/oder eine Vorpositionierung ist möglich.

Wird die Zuführeinrichtung in einer anderen Ausführungsform mittels einer Fördereinrichtung beschickt, können der erste und zweite Sicherheitsbereich als ein gemeinsamer Sicherheitsbereich angesehen werden. Denn eine Fördereinrichtung zur Beschickung ist dazu gedacht, dass eine Bedienperson nicht an die Zuführeinrichtung insgesamt herantritt. Ein solches Herantreten könnte zu einer Verletzung der Bedienperson beim Beschicken durch die Fördereinrichtung führen. Zum Beispiel wäre es deshalb denkbar, einen Sicherheitsbereich um die Zuführeinrichtung herum zu definieren und beispielsweise mittels eines Käfigs gegen unbefugten Zutritt zu schützen.

In einer Ausführungsform ist es vorgesehen, dass der erste und der zweite Sicherheitsbereich mittels voneinander unabhängigen Sicherheitseinrichtungen gesichert sind. Diese Sicherheitseinrichtungen können beispielsweise Trittmatten sein. Aber auch Lichtschranken oder Einhäusungen der Bereiche sind denkbar, oder aber eine Kombination verschiedener Sicherungstechniken. Die beiden Sicherheitsbereiche können auch unterschiedliche Sicherheitseinrichtungen aufweisen. Auch schließt die beschriebene Anordnung nicht aus, dass innerhalb des ersten und/oder zweiten Sicherheitsbereichs wiederum weitere Sicherheitsbereiche vorgesehen sind. Weiter können beide Sicherheitsbereiche hardwaremäßig über eine Steuerung miteinander in Verbindung stehen.

Weiter ist es bevorzugt, zwischen den zuvor genannten Sicherheitsbereichen eine Trennwand vorzusehen, und zwar im Bereich des absenkbaren ersten Anschlags. Die Trennwand erstreckt sich in Richtung des ersten Anschlags oberhalb des Zuführtisches, sowie weiter in zumindest eine Richtung über den Zuführtisch hinaus, so dass sowohl der Bereich oberhalb des Zuführtischs in zwei Bereiche getrennt wird, nämlich den ersten und den zweiten Auflagebereich, als auch eine Trennung zwischen den zwei Sicherheitsbereichen sicherstellt wird. Allerdings kommt die Trennwand im Wesentlichen nicht mit dem absenkbaren Anschlag in Kontakt.

Andernfalls hat die Trennwand die Aufgabe, ein Eindringen der Bedienperson in den zweiten Sicherheitsbereich zu verhindern. In einer anderen Ausführungsform könnte auch anstatt der Trennwand eine Lichtschranke mit der gleichen Aufgabe vorgesehen sein. Würde eine Bedienperson in den zweiten Sicherheitsbereich eindringen, so könnte auf ein Signal der Lichtschranke hin die Zuführeinrichtung, aber z.B. auch die Bearbeitungsmaschine, angehalten werden.

Die Trennwand ist hardwaremäßig/ betrieblich mit der Zuführeinrichtung gekoppelt, das bedeutet, die Zuführeinrichtung funktioniert in einer Ausführungsform aus Sicherheitsgründen nur, wenn die Trennwand am Zuführtisch angebracht ist. Wenn nun die Trennwand an dieser Stelle nicht benötigt wird, z.B. wenn große Werkstücke auf den Zuführtisch aufgebracht werden sollen und dies mit der Ausrichtung der Trennwand nicht möglich wäre (die Trennwand trennt ja den ersten und zweiten Auflagebereich sowie den ersten und zweiten Sicherheitsbereich), ist diese über einen Klappmechanismus verstellbar. Die Trennwand kann somit, ohne sie aus ihrer Verbindung mit dem Zuführtisch entnehmen zu müssen, an eine Seite des Zuführtisches "weggeklappt" werden. Dann stehen die beiden Auflagenbereiche des Zuführtisches gemeinsam zur Verfügung, wenn auch noch der erste Anschlag abgesenkt würde. Die Trennwand ist also durch ihren Aufbau und die Möglichkeiten der Handhabung flexibel den aktuellen Zuführ- und Förderbedingungen (z.B. kleine oder große Werkstücke, Beschickungsrichtung zur Zuführeinrichtung) anzupassen.

Um ein beschicktes plattenförmiges Werkstück spannen zu können, ist es weiter bevorzugt, im ersten Auflagebereich Spannelemente vorzusehen. Die Spannelemente drücken dabei bevorzugt ein beschicktes Werkstück in Richtung der Auflagefläche, und zwar bevorzugt in einer zur Auflagefläche im Wesentlichen senkrechten Richtung. Auf diese Weise wird ein auf die Auflagefläche aufgebrachtes Werkstück gegen Verrutschen gesichert, nachdem die Bedienperson dieses auf den Zuführtisch aufgelegt hat.

Weiter ist bevorzugt vorgesehen, im ersten Auflagebereich einen zum Führungselement ausgerichteten zweiten Anschlag vorzusehen, der hinsichtlich der Auflagefläche absenkbar ist, und eingerichtet ist, das beschickte Werkstück in einer zum ersten Anschlag senkrechten Richtung auszurichten. Die Absenkbarkeit des zweiten Anschlags ermöglicht es folglich, das plattenförmige Werkstück in Richtung des zweiten Anschlags nach einem Ausrichten hierzu freizulegen. Wenn nun diese Seite des plattenförmigen Werkstücks freigelegt ist, ist sie z.B. für Greifelemente zugänglich. Dabei sei an dieser Stelle hinzugefügt, dass die Greifelemente mit einer Ausrichtvorrichtung (Bolzen) versehen sein können. Bevorzugt ist jedoch, dass entweder die Ausrichtvorrichtung in den Greifelementen (Bolzen) oder der absenkbare zweite Anschlag zur Ausrichtung eines Werkstücks in einer Richtung verwendet wird. Damit soll aber nicht ausgeschlossen werden, dass ein Werkstück zuerst am absenkbaren zweiten Anschlag, und anschließend an der Ausrichtvorrichtung der Greifelemente (Bolzen) ausgerichtet werden kann.

In einer bevorzugten Ausführungsform der erfindungsgemäßen Zuführeinrichtung weist der Zuführtisch weiter einen dritten absenkbaren Anschlag auf, der im zweiten Auflagebereich quer zu einer Förderrichtung und senkrecht zum zweiten absenkbaren Anschlag vorgesehen ist. Dieser dritte absenkbare Anschlag, der bevorzugt ebenfalls leistenförmig ausgebildet ist, kann eine Absenkbewegung durchführen, die im Wesentlichen der Auslenkung des ersten absenkbaren Anschlags entspricht. Der dritte absenkbare Anschlag kommt speziell dann zum Einsatz, wenn große Werkstücke in die Zuführeinrichtung beschickt und anschließend gefördert werden sollen. In solchen Fällen kann, um die gesamte Auflagefläche ausnutzen zu können, der erste absenkbare Anschlag abgesenkt sein, und die Ausrichtung somit mit Hilfe des dritten absenkbaren Anschlages durchgeführt werden. Um ein Werkstück anschließend fördern zu können wird der dritte absenkbare Anschlag nachfolgend zum Ausrichten abgesenkt: Damit möglichst die gesamte Auflagefläche mit dem ersten und zweiten Auflagebereich verwendet werden kann, ist der dritte Anschlag bevorzugt in einem Randbereich des zweiten Auflagenbereichs vorgesehen, und zwar in einem Randbereich mit Nähe zur Bearbeitungsmaschine.

Mit anderen Worten ist der dritte absenkbare Anschlag deshalb in seiner Ausrichtfunktion als Alternative zum ersten absenkbaren Anschlag zu sehen, wobei der erste Anschlag abgesenkt ist, wenn der dritte Anschlag zum Einsatz kommt. Folglich erstreckt sich der dritte Anschlag auch im Wesentlichen in derselben Richtung wie der erste Anschlag, und ist ähnlich ausgebildet. Mit anderen Worten bietet der dritte absenkbare Anschlag die Möglichkeit, ein Werkstück in der gleichen Richtung wie mit dem ersten Anschlag auszurichten. Welcher der Anschläge beim Ausrichten zum Einsatz kommt, kann mittels einer Steuerung festgelegt werden, und entscheidet sich je nach Größe des auszurichtenden Werkstücks.

Weiter sei erwähnt, dass in der Bearbeitungsmaschine selbst ein weiterer Maschinenanschlag vorgesehen sein kann, der ebenfalls absenkbar ist. Dies ist allerdings Stand der Technik und nicht Teil dieser Erfindung, wobei das Vorhandensein eines Maschinenanschlags in Kombination mit dem ersten und dritten Anschlag die Flexibilität hinsichtlich der Ausrichtung verschieden großer Werkstücke weiter erhöhen kann. Dieser Maschinenanschlag ist dazu geeignet, lange Werkstücke auszurichten, nämlich dann, wenn z.B. der erste und der dritte absenkbare Anschlag abgesenkt sind, also nicht verwendet werden. Der bekannte Maschinenanschlag kann bei besonders langen Werkstücken verwendet werden, wenn weder der erste noch der dritte Anschlag zum Einsatz kommen kann. Weiter kommt der Maschinenanschlag dann zum Einsatz, wenn Teile mit nicht rechtwinkligen Kanten (Teile die auf Gerung zusammengesetzt werden) ausgerichtet werden sollen, da der Maschinenanschlag bevorzugt als absenkbarer Bolzen oder Zylinder ausgebildet ist, dessen Längsachse sich in Absenkrichtung erstreckt. Dieser Maschinenanschlag ist somit eine Sonderoption, die dem Anwender zusätzliche Möglichkeiten und Flexibilität bietet.

Die Zuführeinrichtung für eine Bearbeitungsmaschine ist weiter bevorzugt dadurch gekennzeichnet, dass in der Auflagefläche Druckluftöffnungen vorgesehen sind. Diese stellen sicher, dass der Zuführtisch, oder genauer gesagt die Auflagefläche gegenüber dem plattenförmigen Werkstück bei dessen Förderung keine Reibkraft entgegen der Förderrichtung erzeugt. Auf diese Weise kann das zu fördernde Werkstück leichtgängig in der Ebene der Auflagefläche bewegt werden. Vorteilhaft könnten in der Auflagenfläche auch Rollen oder Bürsten vorgesehen sein, um eine Reibkraft zwischen Werkstück und Auflagefläche zu minimieren.

Die Zuführeinrichtung für eine Bearbeitungsmaschine ist weiter bevorzugt derart ausgestaltet, dass der Zuführtisch im Bereich des ersten Anschlags, also in einer zum Führungselement senkrechten Richtung, zweigeteilt ist. Damit fungiert der Teil des Zuführtisches, der den ersten Auflagebereich aufweist, als zusätzliches Element des Zuführtisches, welches je nach Bedarf und verfügbarem Platz zugestellt werden kann. Der Teil des Zuführtisches, der den zweiten Auflagebereich aufweist, fungiert folglich als Basiselement.

Unter Verwendung der zuvor beschriebenen Zuführvorrichtung für eine Bearbeitungsmaschine kann ein Verfahren zur Zuführung von bevorzugt plattenförmigen Werkstücken in eine Bearbeitungsmaschine umgesetzt werden, das die folgenden Schritte aufweist: Beschicken eines Werkstücks in einen ersten Auflagebereich eines Zuführtisches, Ausrichten des Werkstücks, Spannen des Werkstücks mittels einer Spanneinrichtung, Greifen des Werkstücks mittels zumindest einem zangenförmigen Greifelement, und Fördern des Werkstücks mit Hilfe des Greifelements der Greifelemente entlang eines Führungselements in Richtung der Bearbeitungsmaschine, und zurück. Weiter kann das Werkstück mit Hilfe des Greifelements/der Greifelemente wieder aus der Bearbeitungsmaschine herausgefördert werden.

Das erfindungsgemäße Verfahren ist bevorzugt dadurch gekennzeichnet, dass das Ausrichten des Werkstücks mit Hilfe zumindest eines Anschlags stattfindet, welcher Anschlag ausgewählt ist aus einem ersten Anschlag, einem zweiten Anschlag, einem dritten Anschlag, einem Maschinenanschlag oder einer Ausrichtvorrichtung. Bei großen plattenförmigen Werkstücken, beispielsweise wenn der erste Abschlag abgesenkt ist, wird ein Werkstück am dritten Anschlag oder dem Maschinenanschlag in der einen Richtung ausgerichtet. In der anderen Richtung kann sowohl der zweite Anschlag als auch die Ausrichtvorrichtung in dem zumindest einen Greifelement verwendet werden. Somit besteht eine große Flexibilität je nach Größe und Gestalt eines auszurichtenden Werkstücks.

Innerhalb des Verfahrensvorgangs kann es bevorzugt sein, vor dem Greifen des Werkstücks mittels Greifelementen einen zweiten Anschlag abzusenken, welcher Anschlag, wie zuvor beschrieben eingerichtet ist, das zu bearbeitende Werkstück auszurichten. Durch Absenken des zweiten Anschlags können die Greifelemente, die sich in der Ebene des Auflagetisches entlang dem Führungselement bewegen, an den flachen Seiten des Werkstücks angreifen und dieses zur Beförderung aufnehmen.

Ist bei der erfindungsgemäßen Zuführeinrichtung ein erster Sicherheitsbereich auf zumindest einer Seite des Auflagebereichs des Zuführtischs vorgesehen, kann es bevorzugt sein, dass das Greifen des Werkstücks erst dann stattfindet, wenn ein Bediener den ersten Sicherheitsbereich verlassen hat. Somit besteht keine Gefahr, den Bediener oder die Bedienperson durch die Greifelemente zu verletzen. Auch kann die Bedienperson nicht, z.B. an den Händen, vom geförderten Werkstück erfasst werden.

Dringt nun die Bedienperson in den zweiten Sicherheitsbereich ein, der auf zumindest einer Seite des zweiten Auflagebereichs des Zuführtischs vorgesehen ist, so bedingt dies ein Anhalten der Zuführeinrichtung. Darüber hinaus kann ein Eindringen in den zweiten Sicherheitsbereich des Weiteren das Anhalten der Bearbeitungsmaschine bedingen. Beide Auswirkungen können einzeln oder in Kombination miteinander auftreten.

Beim erfindungsgemäßen Verfahren zur Zuführung von bevorzugt plattenförmigen Werkstücken in eine Bearbeitungsmaschine ist es weiter bevorzugt vorgesehen, dass beim Beschicken mit Werkstücken, die wegen ihrer Dimension beide Auflagebereiche benötigen, der erste Anschlag abgesenkt wird, und beide Auflagebereiche zum Auflegen eines Werkstücks nutzen zu können. Auf diese Weise ist die erfindungsgemäße Zuführeinrichtung hinsichtlich der Werkstückgröße recht flexibel, d.h. es können sowohl lange Werkstücke als auch kurze Werkstücke beschickt und gefördert werden. Weiter soll allerdings nicht ausgeschlossen werden, dass ein großes Werkstück über die äußeren Dimensionen des Zuführtisches hervorsteht.

Weiter ist das erfindungsgemäße Verfahren dadurch gekennzeichnet, dass beim Greifen des Werkstücks mittels Greifelementen diese Greifelemente unabhängig voneinander am Werkstück angreifen. Mit anderen Worten ist jedes Greifelement für sich steuerbar. Demnach können die Greifelemente unabhängig voneinander am Führungselement verfahren werden, und auch unabhängig ein Werkstück spannen oder wieder los lassen.

Das erfindungsgemäße Verfahren ist weiter dadurch gekennzeichnet, dass zumindest zwei Greifelemente am Werkstück angreifen und nachfolgend das Werkstück fördern. Dabei ist eine Variante, zwei Greifelemente am Führungselement verfahrbar anzubringen. Eine andere Variante wäre drei oder mehr Greifelemente am Führungselement verfahrbar anzubringen. Damit ist die Zuführeinrichtung recht flexibel, denn es können auch mehr als die genannten drei Greifelemente in bevorzugten Ausführungsformen eingesetzt werden.

Werden zwei, drei oder mehr Greifelemente zur Förderung eines Werkstücks verwendet, so kann es bevorzugt sein, dass eines oder mehr der Greifelemente bereits vorzeitig außer Eingriff vom Werkstück kommen, oder nicht weiter an der Förderung beteiligt werden. Das eine oder die mehreren Werkstücke fahren dann zum Beispiel bereits wieder in eine Aufnahmeposition, wo ein neues Werkstück bereits beschickt wurde. Das übrige oder die übrigen Greifelemente hingegen fördern noch das "alte" Werkstück aus der Bearbeitungsmaschine heraus, oder Beenden die Förderung. Auf diese Weise kann eine Art Pendelbetrieb realisiert werden.

### Kurze Beschreibung der Zeichnungen

Weitere Merkmale und Vorteile der vorliegenden Erfindung werden noch deutlicher, wenn die angehängten Figuren, welche Ausführungsformen des erfindungsgemäßen Zuführtischs darstellen, betrachtet werden.
- Fig. 1: stellt eine Zuführeinrichtung für eine Bearbeitungsmaschine gemäß einer Ausführungsform der vorliegenden Erfindung dar, in die eine Bedienperson ein kurzes Werkstück einlegt;
- Fig. 2: stellt eine Zuführeinrichtung gemäß einer bestimmten Ausführungsform der vorliegenden Erfindung dar, die mit einer Trennwand versehen ist;
- Fig. 3: stellt eine bestimmte Ausführungsform einer Zuführeinrichtung gemäß der vorliegenden Erfindung dar, in die eine Bedienperson ein großes Werkstück beschickt;
- Fig. 4: stellt eine bestimmte Ausführungsform der Zuführeinrichtung ähnlich der in Fig. 3 gezeigten dar, allerdings aus einem anderen Blickwinkel betrachtet.
- Fig. 5: stellt eine bestimmte Ausführungsform der Zuführeinrichtung dar, in der ein großes Werkstück beschickt wurde, wobei der erste Anschlag in der abgesenkten, und der dritte Anschlag in der nicht abgesenkten Position gezeigt ist.
- Fig. 6: stellt eine Ausführungsform der Zuführeinrichtung ähnlich zu der in Fig. 5 dar, in der ein großes Werkstück mittels eines Maschinenanschlags nach dem Stand der Technik und einer Ausrichtvorrichtung im Greifelement ausgerichtet wird.

### Ausführliche Beschreibung bevorzugter Ausführungsformen

Bevorzugte Ausführungsformen der vorliegenden Erfindung werden nachfolgend ausführlich unter Bezugnahme auf die angefügten Figuren beschrieben.

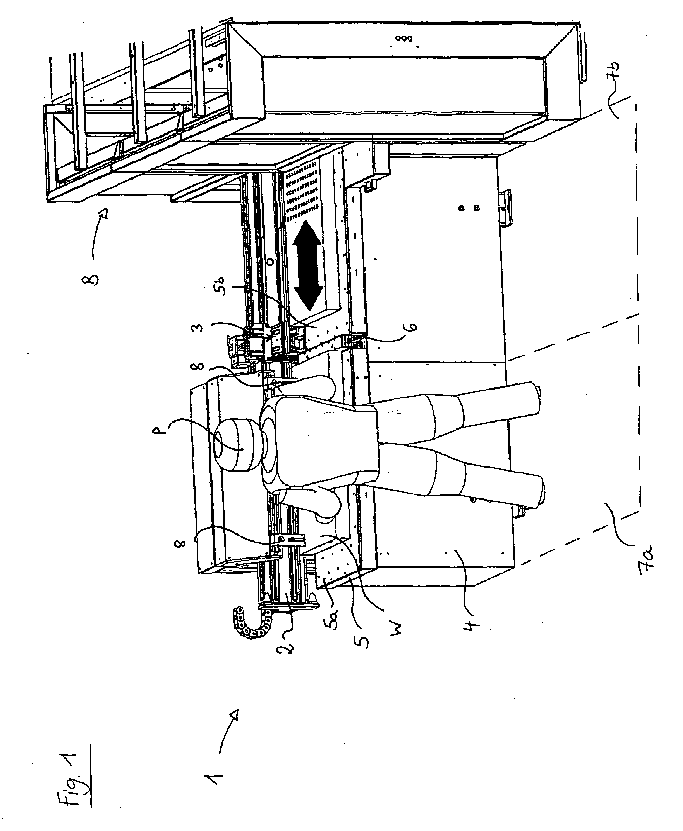

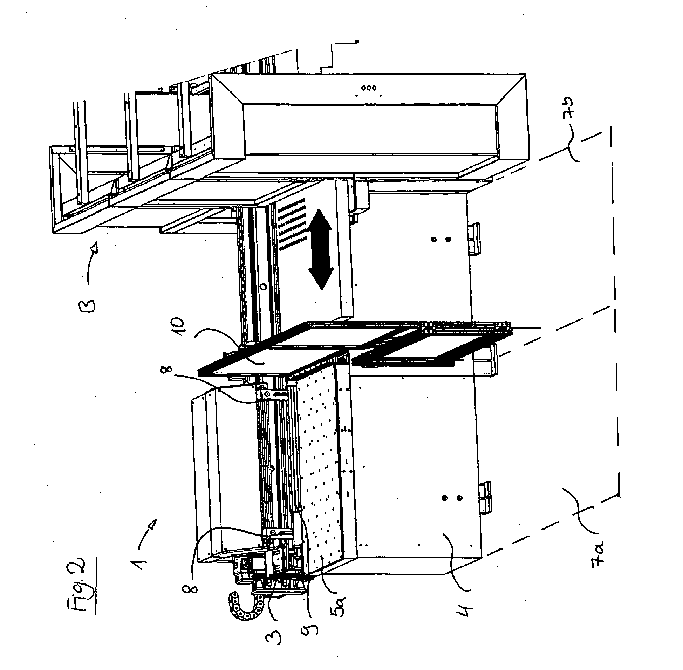

Dabei stellt Fig. 1 eine Zuführeinrichtung dar, welche so angeordnet ist, um Werkstücke in eine Bearbeitungsmaschine B zu fördern. Die Zuführeinrichtung umfasst dabei ein Führungselement 2, welches als ein Schienenelement ausgebildet ist. Am Führungselement sind Greifelemente vorgesehen, welche Greifelemente als Spannbacken ausgebildet sind. Die Greifelemente 3 sind auf dem Führungselement 2, also einer Schiene, verfahrbar angebracht, können also unabhängig voneinander in einer Förderrichtung bewegt werden. In der Nähe zum Führungselement 2 ist ein Zuführtisch 4 vorgesehen, der eine Auflagefläche 5 aufweist. In der Auflagefläche sind Druckluftöffnungen vorgesehen. Der Zuführtisch 4 erstreckt sich in Richtung des Führungselements, mit anderen Worten können die am Führungselement angebrachten Greifelemente entlang einer Längsseite des Zuführtischs und in Richtung der Bearbeitungsmaschine B hin und her bewegt werden. Dies ist in den Figuren 1 und 2 durch einen Pfeil gekennzeichnet.

Die Auflagefläche 5 wiederum ist in zwei Auflagebereiche unterteilt, nämlich einen ersten 5a und einen zweiten 5b. Diese beiden Auflagebereiche 5a, 5b sind durch einen absenkbaren ersten Anschlag 6 voneinander getrennt, welcher Anschlag 6 sich quer zur Förderrichtung der Greifelemente erstreckt und als eine Leiste ausgebildet ist. Bei Bedarf kann der erste Anschlag 6, der in einer zum Führungselement senkrechten Richtung ausgerichtet ist, abgesenkt werden, was bedeutet, dass die beiden Auflagebereiche 5a und 5b gemeinsam genutzt werden können. Der erste Anschlag 6 wird dabei soweit abgesenkt, dass seine obere Fläche in oder unterhalb der Ebene der Auflagebereiche 5a und 5b bzw. Auflagefläche 5 ist. In Fig. 1 ist eine Bedienperson P abgebildet, die sich in einem ersten Sicherheitsbereich 7a befindet und ein Werkstück W in den ersten Auflagebereich 5a auflegt. Der Sicherheitsbereich 7a befindet sich auf zumindest einer Seite des Auflagebereichs 5a des Zuführtischs 4, in der Figur 1 vor dem Zuführtisch.

Weiter ist Fig. 1 ein zweiter Sicherheitsbereich 7b zu entnehmen, welcher sich auf zumindest einer Seite des zweiten Auflagebereichs 5b erstreckt. Dabei können beispielsweise Trittmatten verwendet werden, um die mittels einer gestrichelten Linie in Fig. 1 - 4 dargestellten Sicherheitsbereiche 7a und 7b zu definieren.

In Fig. 1 ist zu erkennen, wie die Bedienperson das Werkstück W auf den ersten Auflagebereich 5a auflegt, und zumindest mittels des ersten Anschlags 6 ausrichtet. Sobald die Bedienperson das Werkstück W ausgerichtet hat, drücken die beiden Spannelemente 8, welche oberhalb des Zuführtisches vorgesehen sind, das Werkstück W gegen die erste Auflagefläche 5a.

Fig. 2 stellt eine weitere bevorzugte Ausführungsform der Zuführeinrichtung für eine Bearbeitungsmaschine B dar. Dabei sind die in Fig. 1 auftretenden Elemente mit der gleichen Referenznummer gekennzeichnet.

Weiter ist in Fig. 2 ein zweiter Anschlag 9 zu sehen, der sich entlang der Längskante des ersten Auflagebereichs 5a erstreckt und ebenfalls im Wesentlichen leistenförmig ausgebildet, also in Richtung des Führungselements 2 ausgerichtet ist. Dieser zweite Anschlag 9 befindet sich in einer rechtwinkligen Ausrichtung zum ersten Anschlag 6. Wird nun ein kurzes Werkstück W aufgelegt, so kann es an beiden Anschlägen 6 und 9 ausgerichtet werden. Auch der zweite in Fig. 2 dargestellte Anschlag 9 ist hinsichtlich der Auflagefläche 5 absenkbar, und zwar soweit, dass er mit seiner obersten Kante in oder unterhalb die Ebene der Auflagefläche 5 gelangt.

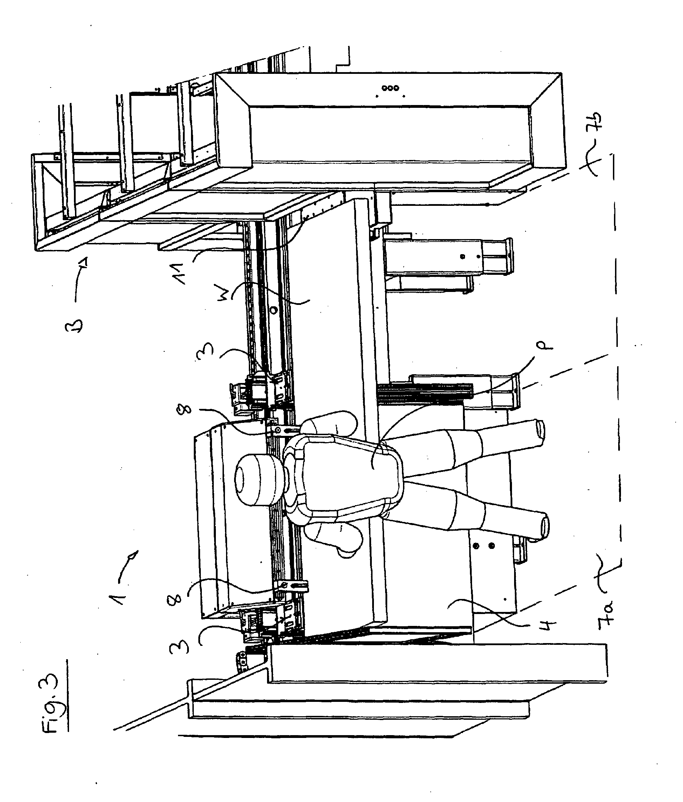

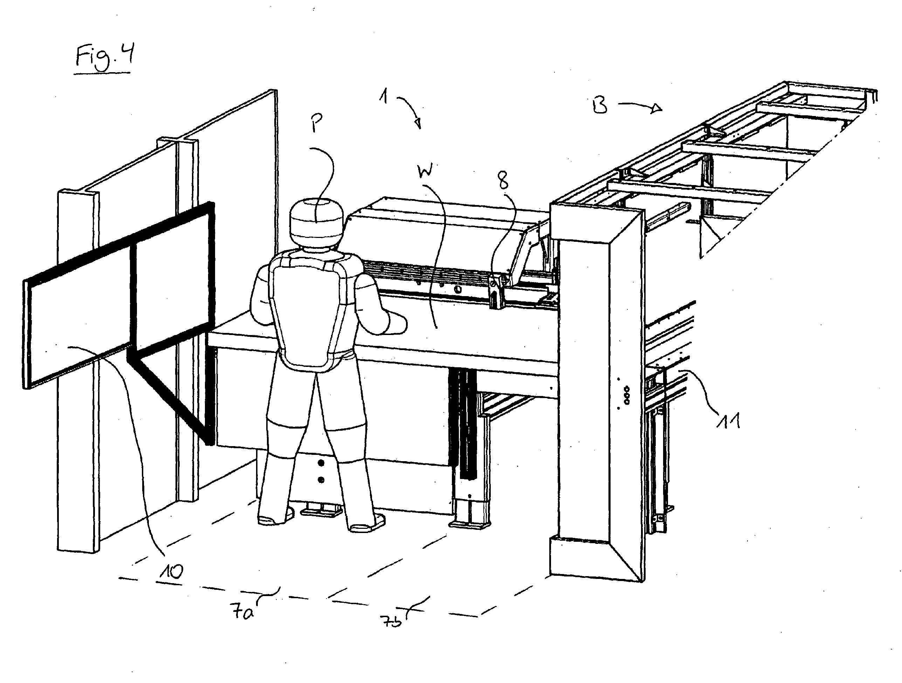

In den beiden weiteren Figuren 3 und 4, ist eine bevorzugte Ausführungsform der Zuführeinrichtung für eine Bearbeitungsmaschine B gemäß der Erfindung dargestellt. Allerdings ist die in den Figuren 3 und 4 dargestellte Zuführeinrichtung 1 nicht für die Aufnahme kleiner Werkstücke, sondern für die Aufnahme großer Werkstücke W eingerichtet. Dazu wurde der Anschlag 6 abgesenkt, und aus den beiden getrennten Auflagebereichen 5a und 5b ein gemeinsamer Auflagebereich gebildet. Somit kann die Bedienperson P ein in seiner Längserstreckung großes Werkstück W ("großes Werkstück W") auf den Zuführtisch 4 auflegen, und am zweiten Anschlag 9 ausrichten. Anschließend wird das Werkstück W mittles der Spannelemente 8 gespannt, der zweite Anschlag 9 abgesenkt und die Greifelemente 3 erfassen das Werkstück W. Weil der Auflagenbereich 5a in Richtung der Greifelemente 3 beweglich sein kann, also eine Hubbewegung in Richtung der Greifelemente möglich ist, kann das ausgerichtete Werkstück auch zwischen die Spannelemente 3a und 3b der Greifelemente bewegt werden.

Wie in allen Figuren 1 - 4 zu erkennen, wird ein Werkstück, nachdem es aufgelegt, ausgerichtet, mittels der Spannelemente gegen die Auflagefläche 5 des Zuführtisches 4 gedrückt und anschließend mit Hilfe der Greifelemente 3 erfasst wurde, in Richtung der Bearbeitungsmaschine gefördert. Da die Greifelemente 3 im vorliegenden Ausführungsbeispiel als Zangen ausgeführt sind, ist es notwendig, dass das Werkstück W zum Zeitpunkt des Greifens durch die Greifelemente 3 in Richtung der Greifelemente 3 vom Zuführtisch 4 übersteht bzw. zu dem zumindest einen Greifelement 3 gefördert wird. Aus diesem Grund ist der erste Auflagebereich 5a in eine Richtung zu den Greifelementen 3 beweglich, um das Werkstück W in die Greifelemente übergeben zu können. Der zweite Anschlag 9, der sich eben an dieser Seite des Zuführtisches erstreckt, wird vor dem Greifvorgang abgesenkt.

Weiter ist in Fig. 2 eine Trennwand 10 dargestellt, die sich zum einen vom Anschlag 6 nach oben erstreckt, und zum anderen die beiden Sicherheitsbereiche 7a und 7b im Bereich vor dem Zuführtisch 4 trennt.

In Fig. 2 ist am Zuführtisch 4 der erfindungsgemäßen Zuführeinrichtung eine Trennwand 10 angebracht, welche Trennwand hardwaremäßig mit der Zuführeinrichtung gekoppelt ist. Das bedeutet, die Zuführeinrichtung funktioniert nur, wenn die Trennwand 10 am Zuführtisch 4 angebracht ist. Selbstverständlich kann auch eine andere Sicherheitseinrichtung als die Trennwand 10 verwendet oder auch eine anders ausgebildete Trennwand eingesetzt werden. In diesen Fällen könnte diese andere Sicherheitseinrichtung oder diese anders ausgebildete Trennwand ebenso hardwaremäßig an die Zuführeinrichtung 1 gekoppelt sein, um als Sicherheitselement dienen zu können.

Die Trennwand 10 erstreckt sich in einer Anordnung, wie in Figur 2 zu erkennen, oberhalb des ersten, absenkbaren Anschlags 6, mit anderen Worten in einer zur Auflagefläche 5 im Wesentlichen senkrechten Richtung. Weiter erstreckt sich die Trennwand in dieser Anordnung in Richtung zumindest einer Seite des Zuführtisches. In dieser Erstreckungsrichtung wird im Wesentlichen der erste und zweite Sicherheitsbereich 7a, 7b getrennt.

Wie in den Figuren 3 und 4 zuerkennen, wird im vorliegenden Ausführungsbeispiel zwar die Kopplung der Trennwand zum Zuführtisch sichergestellt, die Trennwand 10 ist aber derart flexibel aufgebaut, dass sie wenn nötig aus ihrer zuvor beschriebenen Anordnung weggeklappt werden kann. Dazu ist die Trennwand 10, wie schon in Figur 2 deutlich zu erkennen, aus verschiedenen, mit Scharnieren verbundenen Trennwandelementen aufgebaut.

Wird nun, wie den Figuren 3 oder 4, ein großes Werkstück auf die Auflagefläche 5 des Zuführtisch 4 beschickt oder ist die Trennwand 10 aus einem anderen Grund hinderlich und wird vorübergehend nicht benötigt, so wird die Trennwand wie in den Figuren 3 oder 4 zu sehen aus ihrer in Figur 2 dargestellten Anordnung weggeklappt. Dabei legen sich einige der mit Scharnieren verbundenen Trennwandelemente an den Zuführtisch an, und zwar unterhalb der Auflagefläche 5 an einer Seite des Zuführtisches 4. Die restlichen Trennwandelemente sind dann, wie in Figur 4 zu erkennen, für die Beschickung der Zuführeinrichtung 1 unhinderlich angeordnet.

Dabei sei betont, dass sich die in Figur 3 und 4 dargestellte, weggeklappte Trennwand für die dargestellte Beschickung quer zum Zuführtisch vorteilhaft ist. Sollte in einer Längsrichtung, welche gleichzeitig die spätere Förderrichtung ist, beschickt werden, so könnte die Trennwand andersartig weggeklappt werden, um die langen Werkstücke auflegen zu können.

Es soll betont werden, dass bei den in den Figuren 1 - 4 dargestellten Ausführungsformen zwar eine Beschickung der Zuführeinrichtung 1 durch eine Bedienperson P erfolgt. In anderen Ausführungsformen kann es aber auch möglich sein, die Zuführeinrichtung 1 mittels einer weiteren Fördereinrichtung zu beschicken. Auch ist es möglich, den Zuführtisch anders als in den Figuren 1 - 4 gezeigt zu einer Bearbeitungsmaschine B zuzustellen. So ist die Zuführeinrichtung 1 in den Figuren 1 - 4 auf einer linken Seite der Bearbeitungsmaschine B vorgesehen. Aber auch eine Anordnung auf der rechten Seite der Bearbeitungsmaschine wäre bei einer anderen Bearbeitungsmaschine denkbar. Auch ist als eine Seite der Beschickung der Zuführeinrichtung eine andere als in den Figuren 1- 4 dargestellte denkbar.

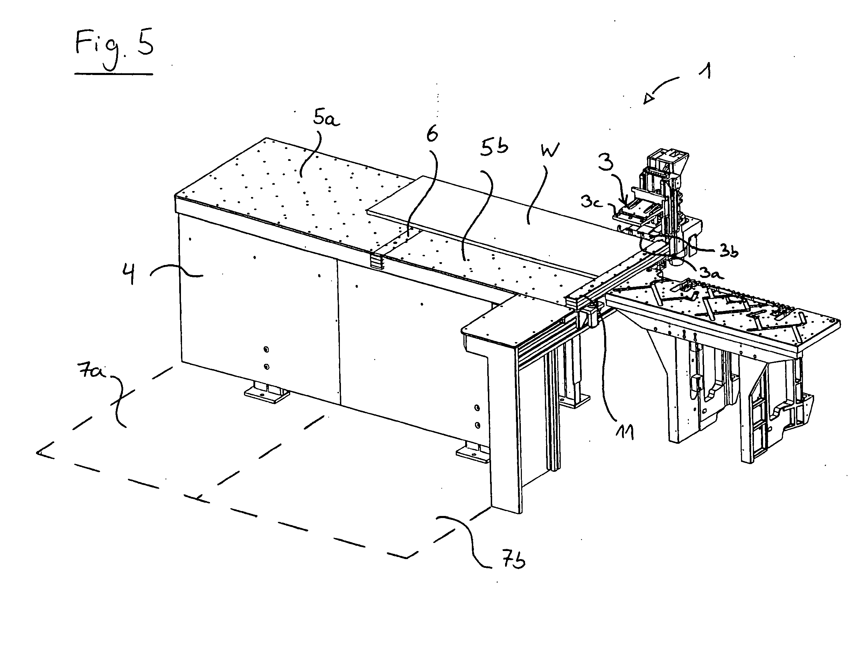

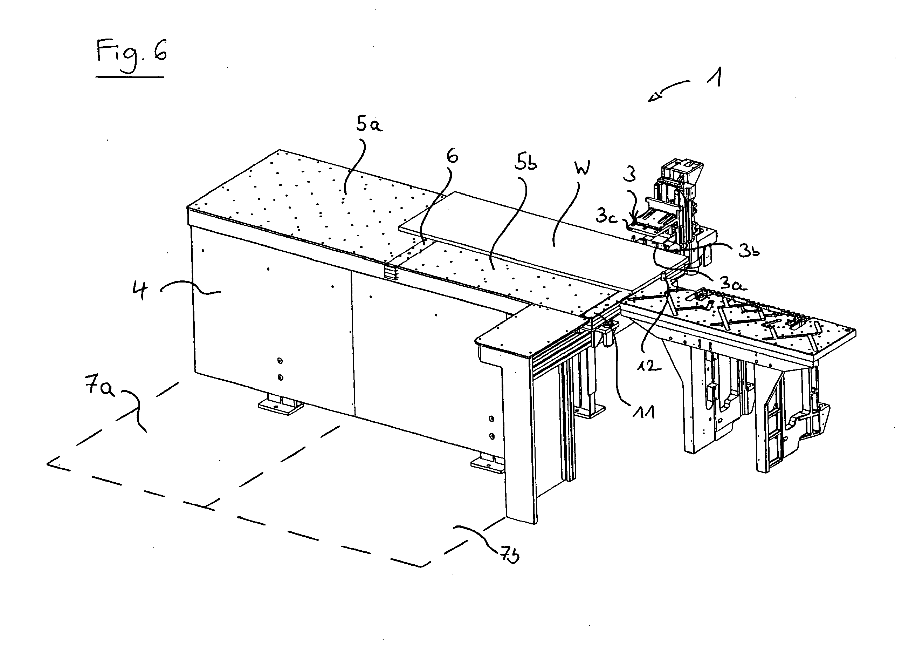

Weiter Bezug nehmend auf Fig. 5 und 6 wird eine Ausführungsform der erfindungsgemäßen Zuführeinrichtung 1 dargestellt. Dabei sind die in den vorangegangenen Figuren identischen Elemente mit den gleichen Referenzzeichen gekennzeichnet. Weiter ist in den Figuren 5 - 6 lediglich ein Greifelement 3 dargestellt, welches zwei Spannzangen 3b, 3c aufweist, um ein Werkstück W greifen zu können. Weiter ist in der unteren Spannzange 3b eine Ausrichtvorrichtung 3a vorgesehen. Diese Ausrichtvorrichtung besteht im vorliegenden Ausführungsbeispiel aus drei Bolzen 3a, die sich senkrecht von der Spannfläche der unteren Spannzange 3b in Richtung zur oberen Spannzange 3c erstrecken. In der oberen Spannzange 3c sind mit den Bolzen 3a fluchtende Bohrungen vorgesehen, durch welche die Bolzen 3a geführt werden können, wenn sich die Spannzangen 3b, 3c zueinander bewegen und somit ein Werkstück W greifen.

In Fig. 5 ist der erste Anschlag 6 in einer abgesenkten Position dargestellt, es stehen also die Auflagenbereiche 5a und 5b gemeinschaftlich zu Verfügung, um ein Werkstück W aufzulegen. Dagegen ist ein dritter absenkbarer, leistenförmiger Anschlag 11 in einer nicht abgesenkten Position, das abgebildete Werkstück W wird also in einer Richtung an diesem dritten Anschlag 11 ausgerichtet. Weiter wird das Werkstück W in Fig. 5 an der Ausrichtvorrichtung 3a (Bolzen) des Greifelements 3 ausgerichtet.

Fig. 6 stellt die gleiche Ausführungsform wie die in Fig. 5 dar, allerdings ist der dritte Anschlag 11 ebenso wie der erste Anschlag 6 in der abgesenkten Position. Um das Werkstück W in dieser Konstellation ausrichten zu können, ist im Bereich der Bearbeitungsmaschine, von der hier lediglich ein Teil des Auflagetisches abgebildet ist, ein Maschinenanschlag 12 zu sehen. Dieser Maschinenanschlag 12 ist ebenso wie der dritte Anschlag absenkbar, kommt also zum Einsatz, wenn Werkstücke ausgerichtet werden sollen, die wegen ihrer Längsausrichtung nicht am dritten Anschlag ausgerichtet werden können, oder aus einem anderen Grund. Weiter wird das in Fig. 6 dargestellte Werkstück W mit Hilfe der Bolzen 3a im Greifelement 3 ausgerichtet.

Wie leicht zu erkennen, ist der Verfahrensablauf in den Konstellationen von Fig. 5 und 6 ähnlich. Nachdem das Werkstück mit Hilfe der Bolzen 3a sowie des dritten absenkbaren Anschlags 11/des Maschinenanschlags 12 ausgerichtet wurde, wird der dritte absenkbare Abschlag 11/der bolzenförmige Maschinenanschlag 12 abgesenkt, um das Werkstück in Richtung der Bearbeitungsmaschine fördern zu können.

Zusammenfassend und unter Bezugnahme auf die Fig. 1 - 6 stehen somit zur Ausrichtung eines Werkstücks die folgenden Anschläge oder Ausrichtvorrichtungen bereit: Der erste Anschlag 6, der zweite Anschlag 9, der dritte Anschlag 11, die Ausrichtvorrichtung 3a (drei Bolzen) sowie Maschinenanschlag 12. Diese Ausrichtvorrichtungen können je nach Größe und Art (z.B. rechtwinkliges Werkstück oder Werkstück mit Gerungen) des zu fördernden Werkstücks flexibel und aufeinander abgestimmt eingesetzt werden. Somit bietet die erfindungsgemäße Zuführeinrichtung 1 dem Anwender ein großes Spektrum an Einsatzmöglichkeiten hinsichtlich der Größe und Art der zu fördernden Werkstücke.

## Patentansprüche

1. Zuführeinrichtung (1) für eine Bearbeitungsmaschine (B) zur Bearbeitung von bevorzugt plattenförmigen Werkstücken, welche Werkstücke bevorzugt zumindest teilweise aus Holz, Holzwerkstoffen, Kunststoff oder dergleichen bestehen, wobei die Zuführeinrichtung (1) aufweist:
ein Führungselement (2),
zumindest ein am Führungselement (2) geführtes und verfahrbares Greifelement (3), das eingerichtet ist, die bevorzugt plattenförmigen Werkstücke aufzunehmen, sowie
einen Zuführtisch (4) in der Nähe zum Führungselement (2) zur Übergabe von Werkstücken an die Greifelemente, der in Erstreckungsrichtung des Führungselement (2) ausgerichtet ist und eine Auflagefläche (5) aufweist, die eingerichtet ist, die bevorzugt plattenförmigen Werkstücke (W) aufzunehmen,
**dadurch gekennzeichnet, dass**
die Auflagefläche (5) des Zuführtisches (4) einen ersten (5a) und einen zweiten (5b) Auflagebereich aufweist, wobei die beiden Auflagebereiche (5a, 5b) durch einen absenkbaren ersten Anschlag (6) voneinander getrennt sind.

2. Zuführeinrichtung (1) für eine Bearbeitungsmaschine (B) gemäß Anspruch 1, **dadurch gekennzeichnet, dass** am Führungselement (2) mindestens zwei Greifelemente (3), bevorzugt jedoch drei Greifelemente, angebracht sind.

3. Zuführeinrichtung (1) für eine Bearbeitungsmaschine (B) gemäß Anspruch 1 oder 2, **dadurch gekennzeichnet, dass** der erste Auflagenbereich (5a) in zumindest einer Richtung zu dem zumindest einen Greifelement (3) und relativ zum Zuführtisch (4) beweglich ist.

4. Zuführeinrichtung (1) für eine Bearbeitungsmaschine (B) gemäß einem der vorangegangenen Ansprüche, **dadurch gekennzeichnet, dass** in dem zumindest einem Greifelement eine Ausrichtvorrichtung (3a) vorgesehen ist, die bevorzugt als eine Vielzahl von zwischen Spannzangen (3b, 3c) des Greifelements verlaufender Bolzen ausgebildet ist.

5. Zuführeinrichtung (1) für eine Bearbeitungsmaschine (B) gemäß einem der vorangegangenen Ansprüche, **dadurch gekennzeichnet, dass** auf mindestens einer Seite des Auflagebereichs (5a) des Zuführtisches (4) ein erster Sicherheitsbereich (7a) vorgesehen ist, und auf zumindest einer Seite des zweiten Auflagebereich (5b) des Zuführtisches (4) ein zweiter Sicherheitsbereich (7b) vorgesehen ist.

6. Zuführeinrichtung (1) für eine Bearbeitungsmaschine (B) gemäß Anspruch 5, **dadurch gekennzeichnet, dass** sowohl der erste (7a) als auch der zweite (7b) Sicherheitsbereich mittels voneinander unabhängigen Sicherungseinrichtungen, insbesondere Trittmatten, gesichert sind.

7. Zuführeinrichtung (1) für eine Bearbeitungsmaschine (B) gemäß einem der vorangegangenen Ansprüche, **dadurch gekennzeichnet, dass** weiter eine Trennwand (10) am Zuführtisch (4) im Bereich des ersten Anschlags (6) angebracht ist, die eingerichtet ist, ein Eindringen in den zweiten Sicherheitsbereich (7b) sowie den Bereich oberhalb der zweiten Auflagefläche (5b) zu verhindern.

8. Zuführeinrichtung (1) für eine Bearbeitungsmaschine (B) gemäß einem der vorangegangenen Ansprüche, **dadurch gekennzeichnet, dass** im ersten Auflagebereich (5a) Spannelemente (8) vorgesehen sind, die eingerichtet sind, das beschickte Werkstück (W) aufzunehmen und auf der Auflagefläche (5) zu spannen.

9. Zuführeinrichtung (1) für eine Bearbeitungsmaschine (B) gemäß einem der vorangegangenen Ansprüche, **dadurch gekennzeichnet, dass** im ersten Auflagebereich (5a) ein zum Führungselement (2) ausgerichteter zweiter Anschlag (9) vorgesehen ist, der hinsichtlich der Auflagefläche (5) absenkbar ist, und eingerichtet ist, das beschickte Werkstück (W) in einer zum ersten Anschlag (6) senkrechten Richtung auszurichten.

10. Zuführeinrichtung (1) für eine Bearbeitungsmaschine (B) gemäß einem der vorangegangenen Ansprüche, **dadurch gekennzeichnet, dass** der Zuführtisch (4) einen dritten absenkbaren Anschlag (11) aufweist, der im zweiten Auflagebereich (5b) quer zu einer Förderrichtung und senkrecht zum Führungselement (2) vorgesehen ist.

11. Zuführeinrichtung (1) für eine Bearbeitungsmaschine (B) gemäß einem der vorangegangenen Ansprüche, **dadurch gekennzeichnet, dass** in der Auflagefläche (5) Druckluftöffnungen vorgesehen sind.

12. Zuführeinrichtung (1) für eine Bearbeitungsmaschine gemäß einem der vorangegangenen Ansprüche, **dadurch gekennzeichnet, dass** der Zuführtisch (4) im Bereich des ersten Anschlags (6) zweigeteilt ist.

13. Bearbeitungsmaschine (B) zur Bearbeitung von bevorzugt plattenförmigen Werkstücken, welche Werkstücke bevorzugt zumindest teilweise aus Holz, Holzwerkstoffen, Kunststoff oder dergleichen bestehen, welche Bearbeitungsmaschine (B) eine Zuführeinrichtung (1) gemäß einem der vorangegangenen Ansprüche aufweist, mit deren Hilfe Werkstücke (W) beschickt und/ oder zugeführt werden können.

14. Verfahren zur Zuführung von bevorzugt plattenförmigen Werkstücken (W) in eine Bearbeitungsmaschine (B) unter Einsatz der Zuführeinrichtung gemäß einem der vorangegangenen Ansprüche, wobei das Verfahren die folgenden Schritte aufweist:
Beschicken eines Werkstücks (W) in einen ersten Auflagebereich (5a) eines Zuführtisches (4),
Ausrichten des Werkstücks (W),
Spannen des Werkstücks (W) mittels einer Spanneinrichtung (8),
Greifen des Werkstücks (W) mittels Greifelementen (3), und
Fördern des Werkstücks (W) entlang eines Führungselements (2) in Richtung der Bearbeitungsmaschine (B).

15. Verfahren zur Zuführung von bevorzugt plattenförmigen Werkstücken in eine Bearbeitungsmaschine (B) gemäß Anspruch 14, **dadurch gekennzeichnet, dass** das Ausrichten des Werkstücks (W) mit Hilfe zumindest eines Anschlags stattfindet, welcher Anschlag ausgewählt ist aus dem ersten Anschlag (6), einem zweiten Anschlag (9), einem dritten Anschlag (11), einem Maschinenanschlag (12) oder einer Ausrichtvorrichtung (3a).

16. Verfahren zur Zuführung von bevorzugt plattenförmigen Werkstücken in eine Bearbeitungsmaschine (B) gemäß den Ansprüchen 14 oder 15, **dadurch gekennzeichnet, dass** vor dem Greifen des Werkstücks (W) mittels Greifelementen (3) ein zweiter Anschlag (9) abgesenkt wird, welcher Anschlag (9) eingerichtet ist, das zu bearbeitende Werkstück auszurichten.

17. Verfahren zur Zuführung von bevorzugt plattenförmigen Werkstücken in eine Bearbeitungsmaschine (B) gemäß den Ansprüchen 14-16, **dadurch gekennzeichnet, dass** das Greifen des Werkstücks (W) erst dann stattfindet, wenn ein Bediener den ersten Sicherheitsbereich (7a) verlassen hat.

18. Verfahren zur Zuführung von bevorzugt plattenförmigen Werkstücken in eine Bearbeitungsmaschine (B) gemäß den Ansprüchen 14-17, **dadurch gekennzeichnet, dass** ein Eindringen in einen zweiten Sicherheitsbereich (7b) das Anhalten der Zuführeinrichtung (1) und/ oder Bearbeitungsmaschine (B) bedingt.

19. Verfahren zur Zuführung von bevorzugt plattenförmigen Werkstücken in eine Bearbeitungsmaschine (B) gemäß den Ansprüchen 14-18, **dadurch gekennzeichnet, dass** beim Beschicken von Werkstücken, die wegen ihrer Dimensionen beide Auflagenbereiche (5a und 5b) benötigen, der erste Anschlag (6) abgesenkt wird, um beide Auflagebereich gemeinsam nutzen zu können.

20. Verfahren zur Zuführung von bevorzugt plattenförmigen Werkstücken (W) in eine Bearbeitungsmaschine (B) gemäß Anspruch 14, wobei
beim Greifen des Werkstücks (W) mittels Greifelementen (3) diese Greifelemente unabhängig voneinander am Werkstück angreifen.

21. Verfahren zur Zuführung von bevorzugt plattenförmigen Werkstücken (W) in eine Bearbeitungsmaschine (B) gemäß Anspruch 14, wobei
zumindest zwei Greifelemente (3) am Werkstück (W) angreifen und nachfolgend das Werkstück fördern.

22. Verfahren zur Zuführung von bevorzugt plattenförmigen Werkstücken (W) in eine Bearbeitungsmaschine (B) gemäß Anspruch 21, wobei
sich zumindest eines der Greifelemente (3) in eine Aufnahmeposition bewegt, während zumindest ein übriges Greifelement (3) das Werkstück (W) noch gegriffen hält.

## Claims

1. Supply device (1) for a processing machine (B) for processing preferably panel-like workpieces, which workpieces preferably consist at least partly of wood, wood materials, plastic or the like, wherein the supply device (1) has:
a guide element (2),
at least one gripping element (3) guided and movable on the guide element (2) and which is equipped to receive the preferably panel-like workpieces, and
a supply table (4) in the vicinity of the guide element (2) to transfer workpieces to the gripping elements, which is aligned in the extension direction of the guide element (2) and has a support surface (5) which is equipped to receive the preferably panel-like workpieces (W),
**characterised in that** the support surface (5) of the supply table (4) has a first (5a) and a second (5b) support area, wherein the two support areas (5a, 5b) are separated from one another by a lowerable first stop (6).

2. Supply device (1) for a processing machine (B) according to claim 1, **characterised in that** at least two gripping elements (3), but preferably three gripping elements, are attached to the guide element (2).

3. Supply device (1) for a processing machine (B) according to claim 1 or 2, **characterised in that** the first support area (5a) can be moved in at least one direction to the at least one gripping element (3) and relative to the supply table (4).

4. Supply device (1) for a processing machine (B) according to one of the preceding claims, **characterised in that** an alignment device (3a), which is preferably designed as a plurality of bolts running between clamping tongs (3b, 3c) of the gripping element, is provided in the at least one gripping element.

5. Supply device (1) for a processing machine (B) according to one of the preceding claims, **characterised in that** a first security area (7a) is provided on at least one side of the support area (5a) of the supply table (4), and a second security area (7b) is provided on at least one side of the second support area (5b) of the supply table (4).

6. Supply device (1) for a processing machine (B) according to claim 5, **characterised in that** both the first (7a) and the second (7b) security area are secured by means of security devices which are independent of one another, in particular foot mats.

7. Supply device (1) for a processing machine (B) according to one of the preceding claims, **characterised in that** a separating wall (10) is also attached to the supply table (4) in the area of the first stop (6) and which is equipped to prevent entry into the second security area (7b) and the area above the second support surface (5b).

8. Supply device (1) for a processing machine (B) according to one of the preceding claims, **characterised in that** in the first support area (5a), clamping elements (8) are provided which are equipped to receive the loaded workpiece (W) and to clamp it on the support surface (5).

9. Supply device (1) for a processing machine (B) according to one of the preceding claims, **characterised in that** in the first support area (5a), a second stop (9) aligned with the guide element (2) is provided which can be lowered with respect to the support surface (5), and is equipped to align the loaded workpiece (W) in a direction vertical to the first stop (6).

10. Supply device (1) for a processing machine (B) according to one of the preceding claims, **characterised in that** the supply table (4) has a third
lowerable stop (11) which is provided in the second support area (5b) transversely to a conveying direction and vertically to the guide element (2).

11. Supply device (1) for a processing machine (B) according to one of the preceding claims, **characterised in that** compressed air openings are provided in the support surface (5).

12. Supply device (1) for a processing machine according to one of the preceding claims, **characterised in that** the supply table (4) is divided into two in the area of the first stop (6).

13. Processing machine (B) for processing preferably panel-like workpieces, which workpieces preferably consist at least partly of wood, wood materials, plastic or the like, which processing machine (B) has a supply device (1) according to one of the preceding claims, with the aid of which workpieces (W) may be loaded and/or supplied.

14. Method for supplying preferably panel-like workpieces (W) to a processing machine (B) using the supply device according to one of the preceding claims, wherein the method has the following steps:
loading a workpiece (W) into a first support area (5a) of a supply table (4),
aligning the workpiece (W),
clamping the workpiece (W) by means of a clamping device (8),
gripping the workpiece (W) by means of gripping elements (3), and
conveying the workpiece (W) along a guide element (2) in the direction of the processing machine (B).

15. Method for supplying preferably panel-like workpieces to a processing machine (B) according to claim 14, **characterised in that** the alignment of the workpiece (W) takes place with the aid of at least one stop, which stop is selected from the first stop (6), a second stop (9), a third stop (11), a machine stop (12) or an aligning device (3a).

16. Method for supplying preferably panel-like workpieces to a processing machine (B) according to claims 14 or 15, **characterised in that** before gripping the workpiece (W) by means of gripping elements (3), a second stop (9) is lowered, which stop (9) is equipped to align the workpiece to be processed.

17. Method for supplying preferably panel-like workpieces to a processing machine (B) according to claims 14-16, **characterised in that** gripping of the workpiece (W) takes place only when an operator has left the first security area (7a).

18. Method for supplying preferably panel-like workpieces to a processing machine (B) according to claims 14-17, **characterised in that** entry into a second security area (7b) necessitates the stopping of the supply device (1) and/or processing machine (B).

19. Method for supplying preferably panel-like workpieces to a processing machine (B) according to claims 14-18, **characterised in that** during loading of workpieces which require both support areas (5a and 5b) because of their dimensions, the first stop (6) is lowered to be able to use both support areas together.

20. Method for supplying preferably panel-like workpieces (W) to a processing machine (B) according to claim 14, wherein during gripping of the workpiece (W) by means of gripping elements (3), these gripping elements act on the workpiece independently of one another.

21. Method for supplying preferably panel-like workpieces (W) to a processing machine (B) according to claim 14, wherein
at least two gripping elements (3) act on the workpiece (W) and subsequently convey the workpiece.

22. Method for supplying preferably panel-like workpieces (W) to a processing machine (B) according to claim 21, wherein
at least one of the gripping elements (3) is moved to a receiving position, while at least one remaining gripping element (3) holds the workpiece (W) still gripped.

## Revendications

1. Dispositif d'alimentation (1) pour une machine d'usinage (B), pour l'usinage de pièces d'oeuvre, se présentant de préférence sous forme de plaques, lesdites pièces d'oeuvre étant composées de préférence au moins partiellement de bois, matériaux ligneux, matière synthétique ou analogue, le dispositif d'alimentation (1) présentant :
un élément de guidage (2),
au moins un élément de préhension (3), guidé sur l'élément de guidage (2) et déplaçable, agencé pour recevoir de préférence des pièces d'oeuvre se présentant de préférence sous forme de plaques,
une table d'alimentation (4) disposée à proximité de l'élément de guidage (2), pour transférer des pièces d'oeuvre aux éléments de préhension, orientée dans la direction d'étendue de l'élément de guidage (2) et présentant une surface d'appui (5), agencée pour recevoir les pièces d'oeuvre (W) se présentant de préférence sous forme de plaques,
**caractérisé en ce que**
la surface d'appui (5) de la table d'alimentation (4) présente une première zone d'appui (5a) et une deuxième zone d'appui (5b), les deux zones d'appui (5a, 5b) étant séparées l'une de l'autre par une première butée (6) escamotable.

2. Dispositif d'alimentation (1) pour une machine d'usinage (B) selon la revendication 1, **caractérisé en ce qu'**au moins deux éléments de préhension (3), de préférence cependant trois éléments de préhension, sont montés sur l'élément de guidage.

3. Dispositif d'alimentation (1) pour une machine d'usinage (B) selon la revendication 1 ou 2, **caractérisé en ce que** la première zone d'appui (5a) est mobile en au moins une direction par rapport au au moins un élément de préhension (3) et par rapport à la table d'alimentation (4).

4. Dispositif d'alimentation (1) pour une machine d'usinage (B) selon l'une des revendications précédentes, **caractérisé en ce que**, dans le au moins un élément de préhension, est prévu un dispositif d'alignement (3a), réalisé de préférence sous forme d'une pluralité de boulons, s'étendant entre des pinces de serrage (3b, 3c) de l'élément de préhension.

5. Dispositif d'alimentation (1) pour une machine d'usinage (B) selon l'une des revendications précédentes, **caractérisé en ce que**, sur au moins un côté de la zone d'appui (5a) de la table d'alimentation (4), est prévue une première zone de sécurité (7a) et, sur au moins un côté de la deuxième zone d'appui (5b) de la table d'alimentation (4), est prévue une deuxième zone de sécurité (7b).

6. Dispositif d'alimentation (1) pour une machine d'usinage (B) selon la revendication 5, **caractérisé en ce que**, tant la première (7a) qu'également la deuxième (7b) zone de sécurité sont assurées au moyen de dispositifs de sécurité indépendants les uns des autres, en particulier des tapis antidérapants.

7. Dispositif d'alimentation (1) pour une machine d'usinage (B) selon l'une des revendications précédentes, **caractérisé en ce que**, en outre, une paroi de séparation (10) est montée sur la table d'alimentation (4), dans la zone de la première butée (6), agencée pour empêcher toute pénétration dans la deuxième zone de sécurité (7b), ainsi que la zone située au-dessus de la deuxième face d'appui (5b).

8. Dispositif d'alimentation (1) pour une machine d'usinage (B) selon l'une des revendications précédentes, **caractérisé en ce que**, dans la première zone d'appui (5a), sont prévus des éléments de serrage (8), agencés pour recevoir la pièce d'oeuvre (W) amenée et la serrer sur la face d'appui (5).

9. Dispositif d'alimentation (1) pour une machine d'usinage (B) selon l'une des revendications précédentes, **caractérisé en ce que**, dans la première zone d'appui (5a), est prévue une deuxième butée (9), alignée par rapport à l'élément de guidage (2), escamotable par rapport à la face d'appui (5), et agencée pour orienter la pièce d'oeuvre (W) amenée en une direction perpendiculaire à la première butée (6).

10. Dispositif d'alimentation (1) pour une machine d'usinage (B) selon l'une des revendications précédentes, **caractérisé en ce que** la table d'alimentation (4) présente une troisième butée (11) escamotable, prévue dans la deuxième zone d'appui (5b), transversalement à une direction de transport et perpendiculairement à l'élément de guidage (2).

11. Dispositif d'alimentation (1) pour une machine d'usinage (B) selon l'une des revendications précédentes, **caractérisé en ce que** des ouvertures à air comprimé sont prévues dans la face d'appui (5).

12. Dispositif d'alimentation (1) pour une machine d'usinage selon l'une des revendications précédentes, **caractérisé en ce que** la table d'alimentation (4) est divisée en deux dans la zone de la première butée (6).

13. Machine d'usinage (B), pour l'usinage de pièces d'oeuvre, se présentant de préférence sous forme de plaques, lesdites pièces d'oeuvre étant composées de préférence au moins partiellement de bois, matériaux ligneux, matière synthétique ou analogue, la machine d'usinage (B) présentant un dispositif d'alimentation (1) selon l'une des revendications précédentes, à l'aide duquel des pièces d'oeuvre (W) peuvent être chargées et/ou amenées.

14. Procédé d'alimentation en pièces d'oeuvre (W), se présentant de préférence sous forme de plaques, dans une machine d'usinage (B) avec utilisation du dispositif d'alimentation selon l'une des revendications précédentes, le procédé présentant les étapes suivantes :
chargement d'une pièce d'oeuvre (W) dans une première zone d'appui (5a) d'une table d'alimentation (4),
orientation de la pièce d'oeuvre (W),
serrage de la pièce d'oeuvre (W) au moyen d'un dispositif de serrage (8),
saisie de la pièce d'oeuvre (W) au moyen d'éléments de préhension (3), et
transport de la pièce d'oeuvre (W) le long d'un élément de guidage (2), en direction de la machine d'usinage (B).

15. Procédé d'alimentation en pièces d'oeuvre, se présentant de préférence sous forme de plaques, dans une machine d'usinage (B) selon la revendication 14, **caractérisé en ce que** l'orientation de la pièce d'oeuvre (W) s'effectue à l'aide d'au moins une butée, ladite butée étant sélectionnée parmi la première butée (6), une deuxième butée (9), une troisième butée (11), une butée machine (12) ou un dispositif d'orientation (3a).

16. Procédé d'alimentation en pièces d'oeuvre, se présentant de préférence sous forme de plaques, dans une machine d'usinage (B) selon la revendication 14 ou 15, **caractérisé en ce que**, avant saisie de la pièce d'oeuvre (W) au moyen d'éléments de saisie (3), une deuxième butée (9) est abaissée, ladite butée (9) étant agencée pour orienter la pièce d'oeuvre à usiner.

17. Procédé d'alimentation en pièces d'oeuvre, se présentant de préférence sous forme de plaques, dans une machine d'usinage (B) selon les revendications 14-16, **caractérisé en ce que** la saisie de la pièce d'oeuvre (W) effectue plus tard, lorsqu'un opérateur a quitté la première zone de sécurité (7a).

18. Procédé d'alimentation en pièces d'oeuvre, se présentant de préférence sous forme de plaques, dans une machine d'usinage (B) selon les revendications 14-17, **caractérisé en ce qu'**une pénétration dans la deuxième zone de sécurité (7b) impose l'arrêt du dispositif d'alimentation (1) et/ou de la machine d'usinage (B).

19. Procédé d'alimentation en pièces d'oeuvre, se présentant de préférence sous forme de plaques, dans une machine d'usinage (B) selon les revendications 14-18, **caractérisé en ce que**, lors du chargement en pièce d'oeuvre, imposant, du fait de leurs dimensions, d'avoir les deux zones d'appui (5a et 5b), la première butée (6) est abaissée pour pouvoir utiliser conjointement les deux zones d'appui.

20. Procédé d'alimentation en pièces d'oeuvre, se présentant de préférence sous forme de plaques, dans une machine d'usinage (B) selon la revendication 14, dans lequel,
lors de la saisie de la pièce d'oeuvre (W) à l'aide des éléments de préhension (3), ces éléments de préhension agissent sur la pièce d'oeuvre, indépendamment les uns des autres.

21. Procédé d'alimentation en pièces d'oeuvre, se présentant de préférence sous forme de plaques, dans une machine d'usinage (B) selon la revendication 14, dans lequel
au moins deux éléments de préhension (3) agissent sur la pièce d'oeuvre (W) et transportent ensuite la pièce d'oeuvre.

22. Procédé d'alimentation en pièces d'oeuvre, se présentant de préférence sous forme de plaques, dans une machine d'usinage (B) selon la revendication 14, dans lequel
au moins l'un des éléments de préhension (3) se déplace en une position de réception, tandis qu'au moins un autre élément de préhension (3) maintient encore saisie la pièce d'oeuvre (W).
